# EUROPEAN PATENT APPLICATION

(11) **EP 1 737 256 A1**
(43) Date of publication of application: **27.12.2006**
(21) Application number: 05425456.0
(22) Date of filing: 24.06.2005
(51) Int. Cl.: H04Q 7/22, H04Q 7/24

(54) **Method to share signalling load between radio access network controllers in a cellular communication network**

(71) Applicant: Siemens S.p.A., 20126 Milano (IT)
(72) Inventor: Zizza, Fabrizio, 28100 Novara (IT)

(57) **Abstract**

A Client/Server Cluster protocol runs at the interfaces between UMTS radio access network controllers (RNC) and an interconnecting IP backbone. The RNCs (nodes) are grouped together so as to form clusters of independent processing pool for signalling. The Cluster protocols is based on the following messages to implement its specific procedures: *Processing Status:* periodically exchanged among all nodes of the cluster to exchange information about the status of the internal processing resources. *Processing Capacity Request:* issued by a client node when its telephony processor is getting close to the congestion state. The aim is to request a target node having free processing capacity to take over processing of the incoming Layer 3 signalling relevant to new calls and/or packet data transmissions. The request message carries information on the status of resources controlled by the Client Node; this will allow the Serving Node to consistently take over their control if accepting the request. *Processing Capacity Reject:* issued by a Serving Node which can't accept a request. *Processing Capacity Confirm:* issued by a Serving Node which accepts a request sent by a Client Node. *Rerouted Signalling:* issued by a Client Node to allow the previously selected Serving Node to take over the RRC tasks for new calls or packet data transmissions on behalf of the Client Node. *Rerouted Signalling* is also issued by the Serving Node to redirect to the Client Node the outcome of the processing. *Connection Setup* or *Connection Tear Down:* issued by the Serving Node for controlling resources of the Client Node during the RRC processing on its behalf. *Congestion Over:* issued by a Client Node to the Serving Node, which will then release the processing resources accordingly (fig.11).

## Description

### FIELD OF THE INVENTION

The present invention relates to the field of the mobile radio networks, and more precisely to a method to share signalling load between radio access network controllers in a cellular communication network. To simplify the disclosure, Used acronyms and bibliographic references are given at the end of the description.

### BACKGROUND ART

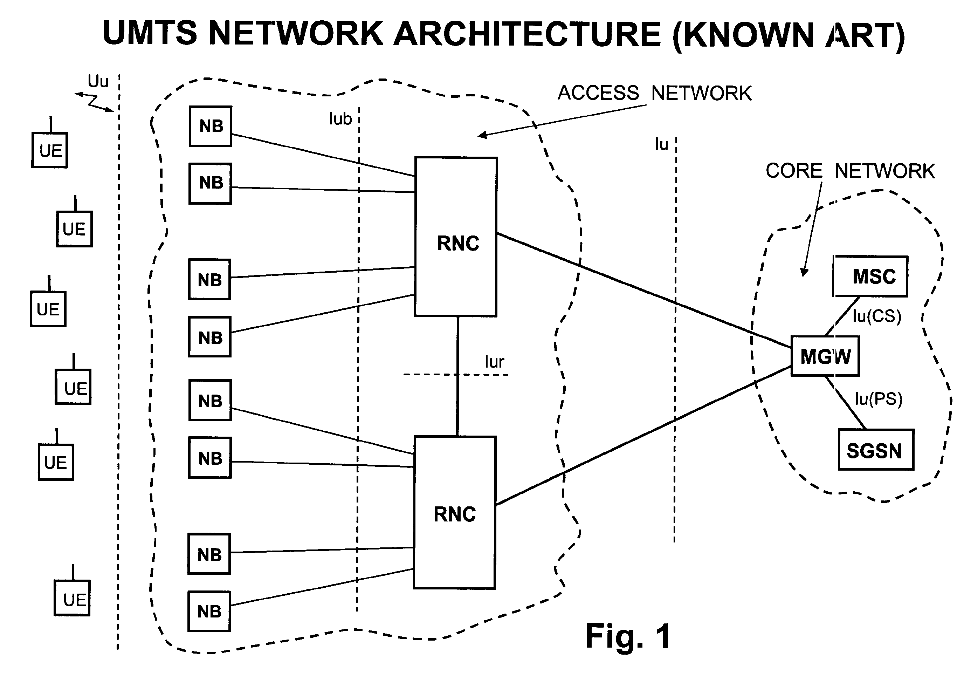

**Fig.1** reports a general block diagram of a UMTS system. With reference to **fig.1,** the system is constituted by a Core Network (CN), an Access Network as the 3GPP UTRAN, and a plurality of User Equipments (UE). The Access Network includes a plurality of base stations, called NodeBs (NB), connected via radio to the served UEs and via terrestrial lines to one ore more respective Radio Network Controllers RNC. An RNC and the controlled NodeBs constitute a Radio Network Subsystem (RNS) disclosed in 3GPP TS 25.401. The simplified Core Network includes the following network elements named: MSC, SGSN, and MGW. MSC is specific for serving the Circuit Switched (CS) domain, SGSN for Packet Switched (PS) domain, while MGW performs the gateway function between the two CN domains (e.g.: voice transcoding from AMR 12.2 Kbit/s to PCM at 64 kbit/s). Although not shown in the figure, the Core Network can be generally connected to the following networks: PSTN, IP, and other PLMNs. The Network Elements represented in **fig.1** are connected to each other via the following standard interfaces: Uu between UEs and NodeBs; lub between RNC and NodeBs; lur between adjacent RNCs; lu(CS) between RNC and MSC, and lu(PS) between RNC and SGSN.

In operation, a NB is composed of one or more cells; inside a cell the NB is responsible of the radio transmission and reception of the signals to/from the User Equipments (UE). The NB is further responsible of Layer 1 (physical) protocol stack as well as of the requested line protocols for interfacing the RNC. An RNC is responsible of Layer 2 (RLC, MAC) and Layer 3 (RRC) protocol stacks, as well as of the requested line protocols for interfacing the Core Network and controlled NBs. The Core Network is responsible for routing both signalling and payload relevant to the CS and PS domains between the originating and terminating nodes at the two sides. As far as the most important Layer 3 signalling protocols are concerned, the following standards are specified in the UTRAN domain: TS 25.413 RANAP on lu interface, TS 25.423 RNSAP on lur interface; and TS 25.433 NBAP on lub interface.

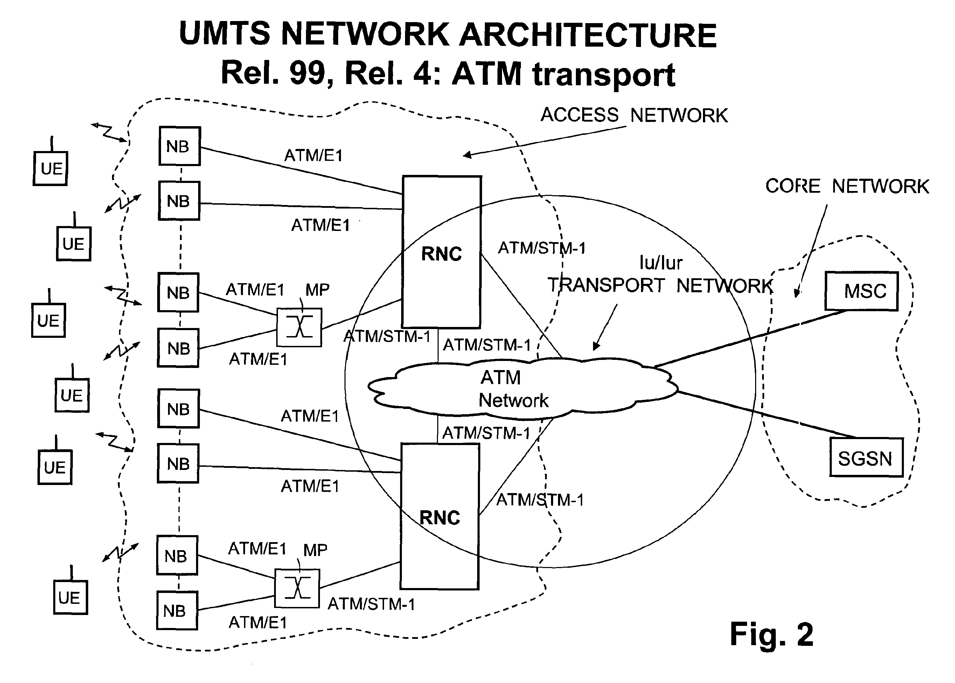

As an expansion of the preceding figure, **fig.2** provides additional insights about a transport backbone, which in 3GPP Rel.99/Rel.4 is based on ATM only. Two-way connections between NBs and RNC take place on ATM/E1 lines either directly or through an interposed E1/STM-1multiplexer/demultiplexer. An ATM Transport Network (ATM backbone) is visible between the Core and the Access Network. The ATM backbone requires that connections on the lub, lur, and lu interfaces are established via O&M procedures.

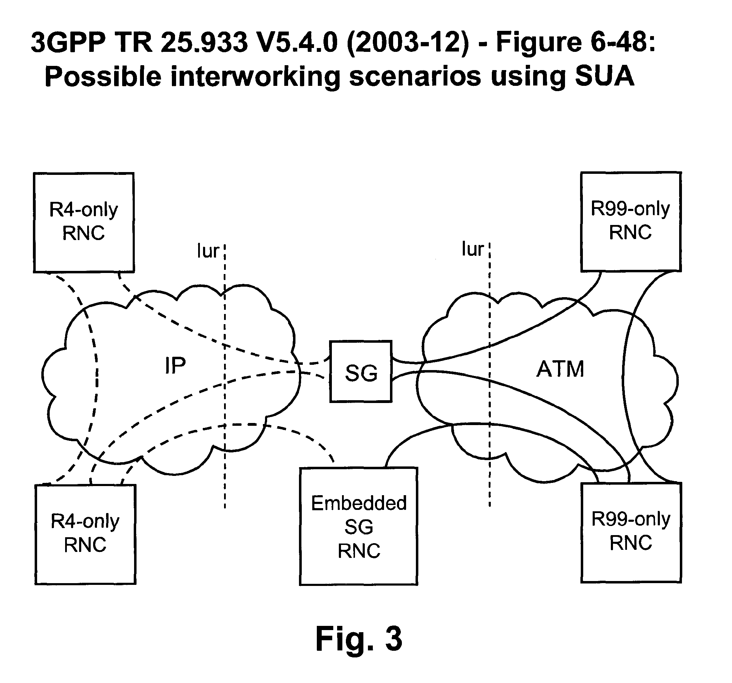

In the successive **fig.3,** reported from 3GPP **TR 25.933** (Release 5), titled: "IP Transport in UTRAN", a Hybrid ATM/IP transport is represented. With reference to **fig.3** we see two interworking scenarios based on SS7 SCCP-User Adaptation Layer (SUA). A first scenario includes two Release-4-only RNCs using IP transport at the lur interfaces. A first IP connection exists between the two RNCs; second IP connections exist between each RNC and a Signalling Gateway (SG) node; a third IP connection is provided between one of the two RNCs and a third RNC with embedded the SG function. A second scenario includes two Release-99-only RNCs using ATM transport at the lur interfaces. A first ATM connection exists between the two RNCs; second ATM connections exist between each RNC and the SG node; a third ATM connection is provided between one of the two RNCs and the third RNC with embedded the SG function.

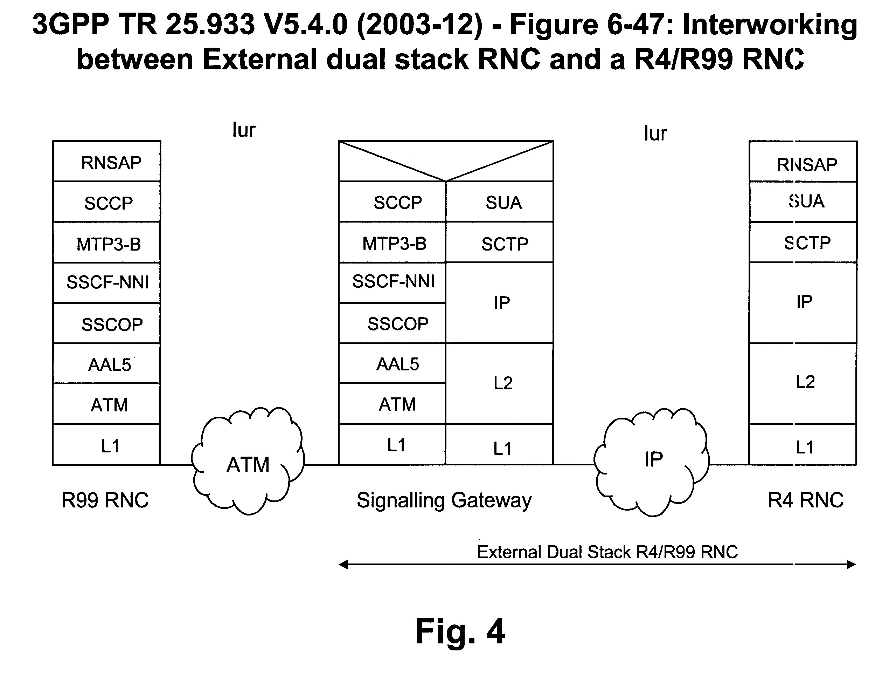

In **fig.4** the protocol stacks that characterize the hybrid lur of the preceding figure are represented. The involved network elements, namely: R99-RNC, SG, and R4-RNC, are indicated at the bottom of their stacks. The RNSAP protocol is placed at the top of each RNC stack. The SG stack at the R99-RNC side includes the following top-down protocols: SCCP, MTP3-B, SSCF-NNI, SSCOP, AAL5, ATM, and L1. The SG stack at the R4-RNC side includes the following top-down protocols: SUA, SCTP, IP, L2, and L1. The following references are valid:
- *Radio Network Subsystem Application Part (RNSAP),* see TS 25.423;
- *Signalling Connection Control Part (SCCP),* see 3GPP TS 25.412;
- *Message Transfer Part Layer 3 Broadband (MTP3-B),* see 3GPP TS 25.412 transport sublayers;
- *Service Specific Coordination Function (SSCF-NNI),* see ITU Recommendation Q.2140;
- *Service Specific Connection Oriented Protocol (SSCOP),* see ITU Recommendation Q.2110, data link sub-layers;
- *Asynchronous Transfer Mode (ATM),* see ITU Recommendation 1.361 and STM-1 (see ETSI STM-1 (155 Mb/s) interface according to 1.432.2 [10] with electrical interface (CMI) to G.703 [9]);
- SS7 *SCCP-User Adaptation Layer (SUA),* see TR 29.903;
- *Stream Control Transmission Protocol (SCTP),* see ITU Recommendation Q.2150.3, and RFC 3309;
- *Internet Protocol (IP),* see IETF RFC 791 (9/1981).

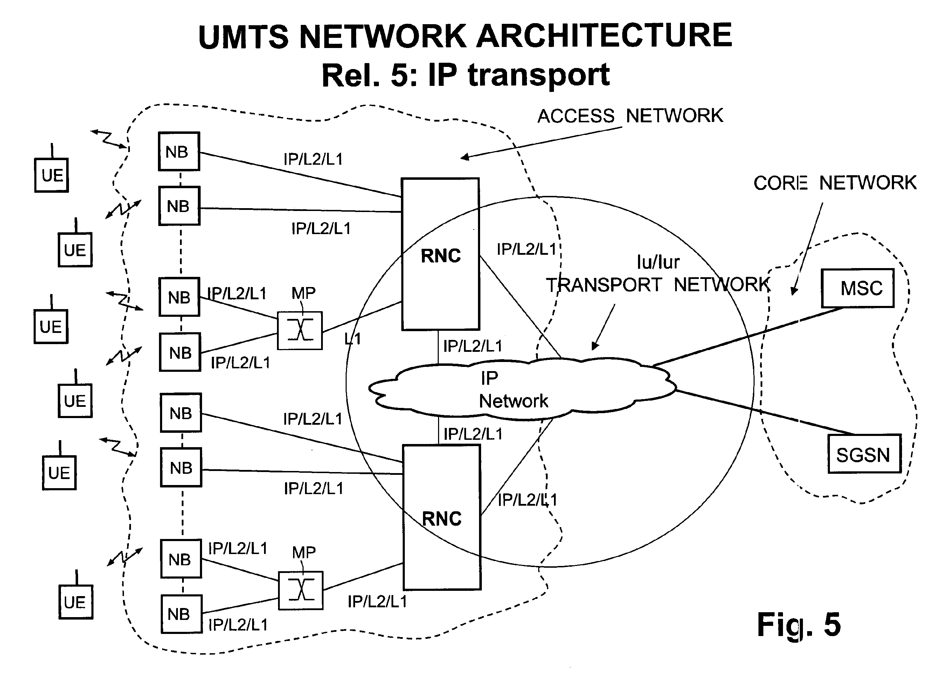

Starting from Rel.5 the transport backbone can be based on IP as well. **Fig.5** is a further expansion of the UMTS architecture of **fig.1** in this direction. Two-way connections between NBs and RNC take place on IP/L2/L1 lines either directly or through an interposed multiplexer/demultiplexer MP. An IP Transport Network (IP backbone) is visible between the Core and the Access Network. The backbone may also be used at the lub side. In contrast to the ATM backbone, which requires that connections at the lub, lur, and lu interfaces are established via O&M procedures, the IP backbone does not require the pre-establishment of any interconnection. As a result, the availability of an IP backbone simplifies the exchange of information between RNCs and is therefore more suitable (though not absolutely necessary) than a purely ATM-based transport to the deployment of the invention.

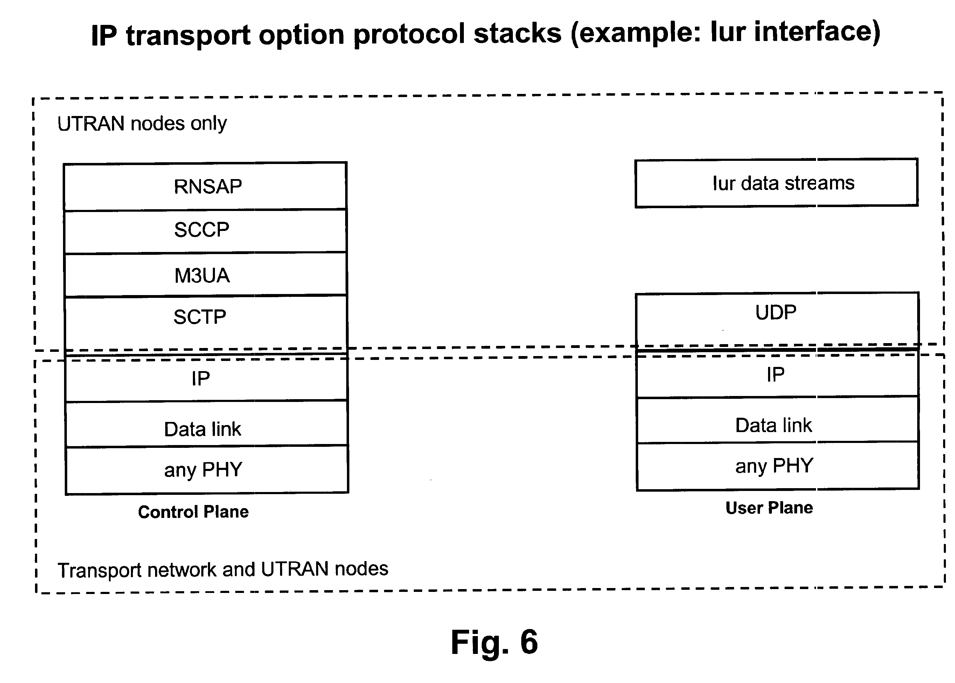

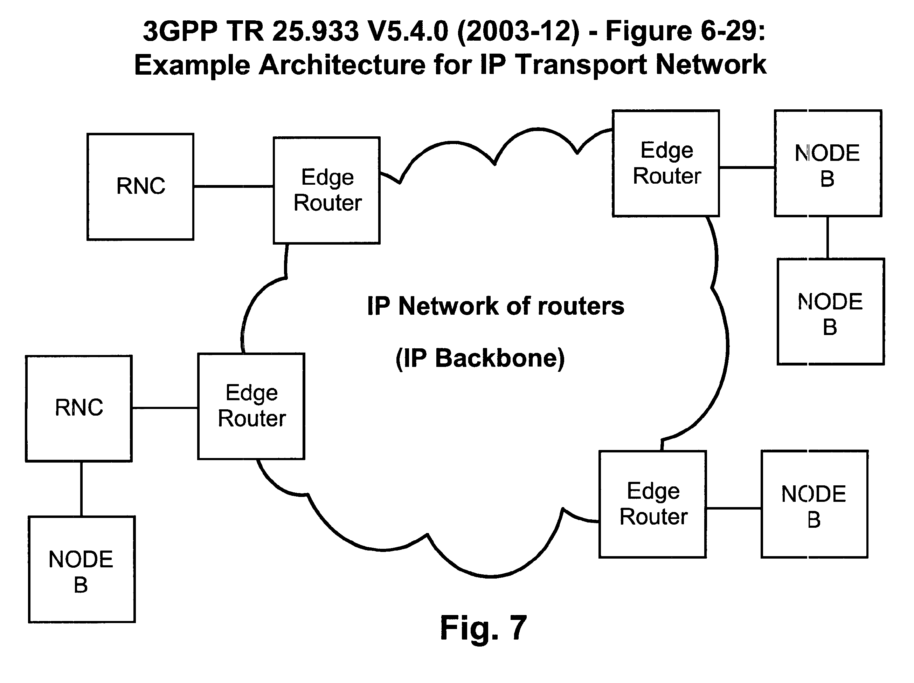

In **fig.6** the protocol stacks that characterize the Control Plane and the User Plane at the lur interface of the preceding figure are represented. The stack on Control Plane includes the following protocols/layers: PHY (any), Data link, IP, SCTP, M3UA, SCCP, and RNSAP. The stack on User Plane includes the following protocols/layers: PHY (any), Data link, IP, UDP, and lur data streams. Protocols of the two stacks from PHY to IP (included) are used by the Transport network and UTRAN nodes, the remain ones are used by UTRAN nodes only.

The following opportunities offered to the IP transport option at the lur interface are derivable from the aforesaid specifications:
- Use of IPv6 and IPv4, being IPv6 mandatory for UTRAN NEs and optional for transport.
- Use of the SCTP protocol to the signalling transport. It is worthy of note that SCTP is an end-to-end protocol, so that the transport node of the interconnecting IP network are not involved with it, as usual in these networks.
- Use of UDP/IP for data streams.
- The freedom of using a data link and a physical layer at the discretion of the manufacturer (although PPP with HDLC framing must be supported by all UTRAN nodes).

Because of the present invention impacts with the RNC signalling and interconnection, a summary of the RNC operation at the lur interface is given. That RNC initially responsible of handling the connection for the UE is called serving RNC (S-RNC). If during the lifetime of a connection the UE moves to a cell controlled by another RNC, the S-RNC activates some procedures on the lur interface with the new RNC, called drift RNC (D-RNC), for requesting resources to keep the connection alive. If the request is granted the connection of the UE is prolonged to the new base station and the D-RNC. The S-RNC also decides to add, remove or replace radio links from the active set, useful for soft handover, constituting an anchor point towards the Core Network.

The lur interface is described in TS 25.420. The protocol architecture consists of two functional layers (horizontal):
- Radio Network Layer, defines the procedures related to the interaction of two RNCs within a PLMN. The radio network layer consists of a Radio Network Control Plane and a Radio Network User Plane. The Radio Network Layer is subdivided (vertically) into Control Plane and User Plane.
- Transport Network Layer, defines procedures for establishing transport connections between two RNCs within a PLMN. The Transport Network Layer is subdivided (vertically) into Control Plane, Transport Network Control Plane, and User Plane.

According to TS 25.423, the Level 3 RNSAP protocol consists of Elementary Procedures (EPs). An Elementary Procedure is a unit of interaction between two RNCs. An EP consists of an initiating message and possibly a response message. The sender of an RNSAP messages shall include the Source Signalling Address, i.e. the Signalling Address of the sending node. The signalling transport shall provide two different service modes for the RNSAP: 1) Connection oriented data transfer service; 2) Connectionless data transfer service. The RRC procedures of the RNSAP can be subdivided in four modules:
- RNSAP Basic Mobility procedures. Support Basic Inter-RNC mobility, e.g. for: S-RNC relocation, Inter-RNC Cell & URA update, Inter-RNC packet paging, etc.
- RNSAP DCH procedures. Support the Inter-RNC soft handover, e.g.: to establish, modify or release the transfer of DCH traffic between two RNCs (Serving/Drift). Therefore these procedures and the preceding ones are essential for the implementation of the lur interface.
- RNSAP Common Transport Channel procedures (optional). They are implemented to handle common and shared data on lur. The benefits of these procedures is to reduce the number of necessary S-RNC relocations.
- RNSAP Global procedures (optional). Allow the support of enhanced RR and O&M features on lur.
The RNSAP protocol provides a lot of functions specified in clause 7 of the standard, the following ones are remarked:
- Reporting of General Error Situations. This function allows reporting of general error situations, for which function specific error messages have not been defined.
- Information Exchange. This function allows an RNC to request from another RNC the transfer of information. The function also allows the requested RNC to report the requested information.
- Resetting the lur. This function is used to completely or partly reset the lur interface.

Subclause 9.1 presents the RNSAP messages in tabular format. Subclause 9.2 presents the Information Elements (IE) included in the RNSAP messages in tabular format. Subclause 9.3 presents the Abstract Syntax of RNSAP protocol with ASN.1. The ASN.1 definition specifies the structure and content of RNSAP messages. RNSAP messages can contain any IEs specified in the object set definitions for that message. A sending entity shall construct a RNSAP message according to the PDU definitions module and with some additional rules. If a RNSAP message is not constructed accordingly shall be considered as Abstract Syntax Error and opportunely handled. Among the many IEs there is "Cause" to indicate the reason for a particular event for the whole protocol. Particularly interesting are the following Miscellaneous causes defined in subclause 9.2.1.5:

| **Miscellaneous cause** | **Meaning** |
|---|---|
| Control Processing Overload | DRNS control processing overload |
| Hardware Failure | DRNS hardware failure |
| Not enough User Plane Processing Resources | DRNS has insufficient user plane processing resources available |
| O&M Intervention | Operation and Maintenance intervention related to DRNS equipment |
| Unspecified | Sent when none of the above cause values applies and the cause is not related to any of the categories Radio Network Layer, Transport Network Layer or Protocol. |

Another interesting IE is "RANAP Relocation Information". This parameter is specified by the content of a bit string transparent to the RNSAP. It contains information for the Relocation procedure as defined in RANAP.

### OUTLINED TECHNICAL PROBLEM

In the current UTRAN a static binding exists between Node B and RNCs. Each RNC supervises a number of NodeBs, handling signalling coming from/directed to UEs and managing Node B radio resources as well as local switching resources (incoming/outgoing lines and associated transport channels) necessary to support user services. These tasks exploit telephony processors located inside RNCs and exclusively used for the support of tasks local to the RNC itself. This assertion is true also for the Transport Networks depicted in **fig.2, fig.3,** and **fig.5.** Given the described static binding, processing resources available in the RNC cannot be uniformly exploited in the network, leading to possible capacity problems and/or uneven exploitation of processing resources in the UTRAN. Depending on traffic conditions in controlled areas, it can happen that some RNCs become congested while other ones still have free processing power left. In the current UTRAN, solutions to the problem of congestion in the RNC have up to now been investigated only in the domain of the individual controller itself. In this optic, when a source RNC receives a response message including either "Control Processing Overload" or "Not enough User Plane Processing Resources" IEs, it triggers some procedures directed to remove the cause of the overload. Possible actions are:
1. Resetting resources at the lur interface.
2. Sending a RELOCATION COMMIT message by a source RNC to a target RNC to request it to proceed with the Relocation. Upon receipt of the RELOCATION COMMIT message from the source RNC the target RNC finalises the Relocation. If the message contains the transparent *RANAP Relocation Information* IE the target RNC shall use this information when finalising the Relocation. This indirectly reduces the Processing Overload inside the RNCs.

The countermeasure at point 1 is excessively drastic: for example all resources for the transmission of control and user data for one specified UE or group of UEs are released. The countermeasure at point 2 is not fully adequate to counteract processing overload but rather to the excessive cell load due to traffic peaks.

Scalable telephony processor HW can be adopted, which provides additional processing resources that can be exploited when required by traffic conditions. However, this solution requires that RNCs are statically equipped with an amount of telephony processors, which can be largely underexploited depending on traffic conditions.

Standardisation bodies are now beginning to evaluate resource pooling solutions that would allow an optimised use of telephony processors, as aimed at by this proposal. These solutions addressed by standardisation bodies foresee a radical change in the architecture of the RAN, for example a distributed RAN with a complete separation between telephony processors and controlled HW, and definition of standard interfaces between them. **Fig.7** is an attempt to define an IP transport layer taken from **TR 25.933** (figure 6-29). With reference to **fig.7,** the depicted architecture includes an IP Network of routers, called IP Backbone. Routers forwarding IP packets in the Backbone may have the following characteristics:
- They may handle information at any layer lower or equal to IP.
- They may handle higher layer information for Transport Network O&M or configuration purpose.
Other IP features may encompass tunnelling mechanisms (e.g. MPLS) or mechanisms requiring storage of state information for every flow (e.g. RSVP). Such features, if too much specific or complex, should not be required to be standard function of the transport network. If the First Router is part of the IP network of routers, it is typically named Edge Router. The Edge Routers are connected to the RNCs or to the Node B directly.

A possible implementation of the protocol stack at the interfaces between an Edge Router and the opposite Network Element (either RNC or Node B) could be similar to the one depicted in **fig.6** at the IP side. Presently, the whole IP UTRAN and its interfaces with the interconnecting backbone is under standardization but this process is far to be satisfactorily completed.

From all the above considerations it can be conclude that a valid solution to the problem of the fair exploitation of RNC processing resources inside a RAN is far to be solved.

### OBJECT, SUMMARY, AND ADVANTAGES OF THE INVENTION

The object of the present invention is that to overcome the inefficiencies of the current RANs in the exploitation of processing resources, and indicate a method to manage the processing overload more efficiently.

The invention achieves said object by providing a signalling method at the interfaces between base station controllers, also termed nodes, inside a radio access network of a cellular communication system, as disclosed in claim 1.

The proposed method revolves around enhancing the existing RAN architectures considering one or more clusters of nodes as constituting individual processing pools adopting a transport backbone for interconnecting the nodes taking part in each cluster, in order to implement the following functions:
- Distributing processing capacity status information:
   - each node in the cluster distributes the status of its processing resources to the other nodes. This is done periodically. Broadcast/multicast mechanisms can be exploited if available in the cluster backbone.
- Issuing capacity requests:
   - when a node becomes congested, it requests processing resources to a target node that is known (via previously received processing status information) to have free processing capacity. The redirecting node will provide the state of its controlled resources, both BS-specific and transport-specific resources (e.g. lines and used bandwidth) to the target node (which will take over the control of these resources for new calls until congestion comes to an end);
   - in case the processing capacity request is not accepted, the congested node will repeat its request to another target node.
- Rerouting Layer 3 (L3) signalling requests:
   - when the processing capacity request is accepted, the signalling relevant to all new calls received by a congested node will be rerouted to the accepting node, which will then process them and execute related Radio Resource Management (RRM) algorithms on behalf of the congested node.
- Rerouting Layer 3 (L3) signalling responses:
   - the accepting node reroutes the outcome of the processed signalling to the requesting node to be forwarded to the Core network, transparently.
- Communicating the end of congestion state:
   - the requesting node informs the accepting node about the end of the congestion. The accepting node releases control of resources of the requesting node, which now continues on its own.

The invention requires therefore the definition of two roles for controllers taking part in a cluster:
- Client Node: a cluster member requesting processing capacity from a *Serving Node* in the cluster.
- Serving Node: a cluster member providing processing capacity to a *Client Node* in the cluster. This node must own the status of Base Station plus transport resources controlled by a Client Node asking for processing resources (provided when requesting the service). The Serving Node processes local calls as well, but the traffic they provide does not consume its complete processing capacity.
A given node in a cluster cannot assumes both roles simultaneously. Because of the method of the invention is oriented to handle signalling at cluster level, it is also termed "Cluster protocol" hereafter in the description.

The invention provides benefits to the customer of the RAN equipment, who can use the network in a more efficient way. By adopting the invention, dimensioning of processing resources can be done on a cluster level, thereby better exploiting the processing capacity of the individual processors by using their free room, when available, for the support of other nodes in the cluster. From the viewpoint of the equipment manufacturer, the invention increases the appeal of available products by supplying an add-on capability that does not alter their basic structure while providing significant benefits. The invention fills the gap between the current RAN, based on a static binding between Base Stations and their controllers and on the consequent rigid association of processing resources to controlled Base Stations, and the future distributed RAN, in which the controller function is expected to be split by separating control functions from user/transport ones. By doing this, the invention achieves the most evident benefit of the distributed architecture, for example, processing resources become pool resources and are therefore better exploited, reducing the amount of dropped traffic and providing a better service to customers and better revenues to operators, while at the same time it avoids to perform in a single step the complex restructuring that will come with the standard solution.

The skilled in the art can appreciate that the teaching of the invention is more general than the mere reference to the 3GPP standard made in the introduction. In fact, any cellular telephony system, whatever is the nature of the implemented physical channel (e.g.: TDMA, FDMA, CDMA, SDMA, OFDM, etc. or combination) and the used duplexing technique (either FDD or TDD), includes a plurality of mobile users served by a Radio Access Network connected to a Core network, and the RAN in its turn includes a plurality of base stations each responsible for a respective cell, and a plurality of controllers each responsible for a cluster of base stations, and a transport network (backbone) to interconnect the various controllers is easily conceivable. The teaching of the invention can be also extended to the case where the base station is even assuming the role of controller. Concerning the transport network various alternatives are possible, for example, ATM-only transport, IP-only transport, or ATM and IP interworking transport. Due to its intrinsic aptitude in handling connections at the Network layer, the only-IP transport option is preferable.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1,** already described, shows the general diagram of a 3GPP UM15 system;
- **fig.2,** already described, shows a UTRAN based on ATM transport;
- **fig.3,** already described, shows possible lur interworking scenarios between ATM-based and IP-based RNCs;
- **fig.4,** already described, shows the protocol stacks at the lur interface of the interworking scenarios of fig.3;
- **fig.5,** already described, shows a UTRAN based on IP transport;
- **fig.6,** already described, shows the protocol stacks at the lur interface of the UTRAN of fig.5;
- **fig.7,** already described, shows an exemplary architecture of a whole IP UTRAN proposed by 3GPP as further evolution of the UMTS Release 5;
- **fig.8a** shows the general diagram of an UMTS system including a clusterized backbone to interconnect clusters of RNCs operating in accordance with the Cluster protocol of the present invention;
- **fig.8b** differs from fig.5a by the presence of an unique Backbone instead of the clusterized one;
- **fig.9** shows, graphically, efficient signalling paths with the clusterized backbone of fig.8a;
- **fig.10** shows a possible transport stack for the Cluster protocol of the present invention;
- **fig.11** shows, graphically, the general signalling rerouting principle defined by the present invention;
- **figures 12** to **17** show, graphically, the signalling paths between elements/nodes of the UMTS system of fig.8a in correspondence of possible applications of the Cluster protocol of the present invention;
- **figures 18** to **21** show respective flow-charts of the Cluster protocol of the present invention.

### DETAILED DESCRIPTION OF AN EMBODIMENT OF THE INVENTION

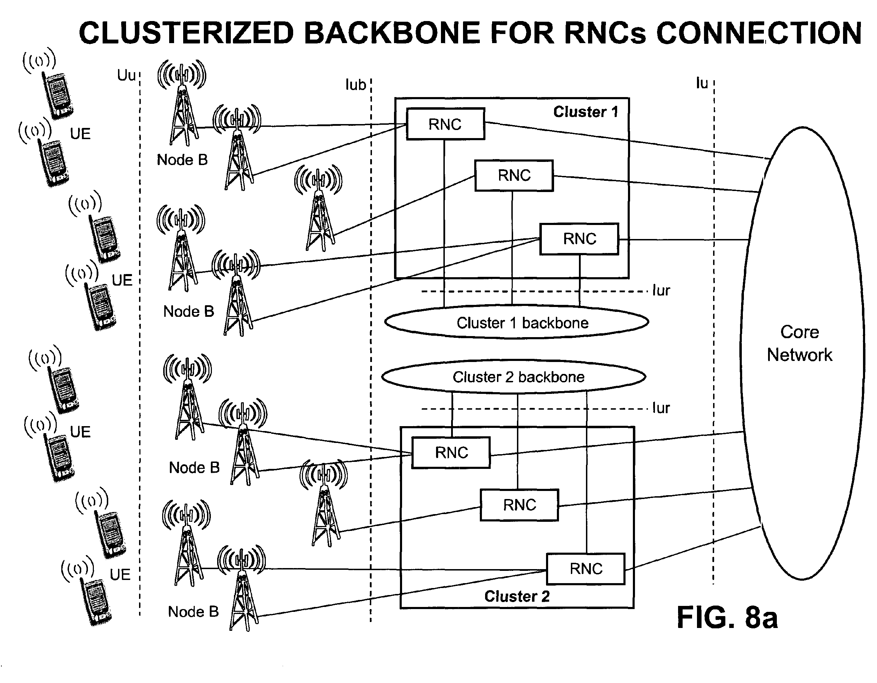

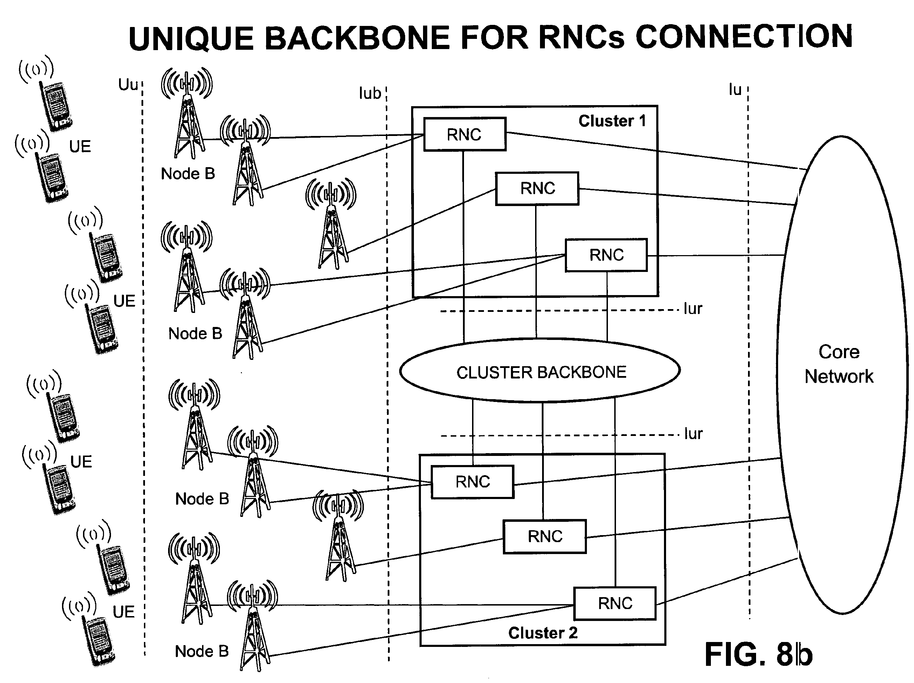

**Figures 8a** and **8b** show an UMTS network which differs from the ones represented in the figures 2 and 5 by the fact that a certain number of RNCs are grouped together to constitute a cluster of RNCs connected to a cluster backbone at the lur interface. Depending on geographic characteristics of the specific RAN to which the invention is applied, the cluster backbone may either be:
- a single network interconnecting all nodes of a cluster for every cluster, as shown in **fig.8b;**
- a set of disjoint transport networks, as shown in **fig.8a.**
The cluster backbones of **fig.8a** may be hosted by the single infrastructure of **fig.8b,** which will take care of keeping the separation between the different clusters (e.g. via VPN mechanisms).

With reference to **fig.8a** and **8b,** each cluster is representing a pool of RNCs sharing the capacity of their signalling processors when necessary conditions are met. Depending on the amount of RNCs that are part of a given UTRAN, the complete network may be modelled as a single cluster or as a number of them. The exact sizing of clusters being a network engineering parameter which depends on the expected processing load in a given area. The more the expected processing load increases in an area, the more the cluster size increases around that area in order to lower the probability of block of the single processors. Clusters with a single RNC are also foreseeable. All elements in the cluster are fully interconnected by the cluster backbone, which constitutes a Transport network consisting of the following elements:
- Transmission lines, connecting the RNCs to the transport network. These lines can be based on any L1/L2 protocols suitable to the type of transport selected for the backbone. The lines used for the lur interface of the RNCs will support the exchange of the messages of a Cluster protocol which will be described later.
- Routers, providing the capability to route datagrams carrying said messages.

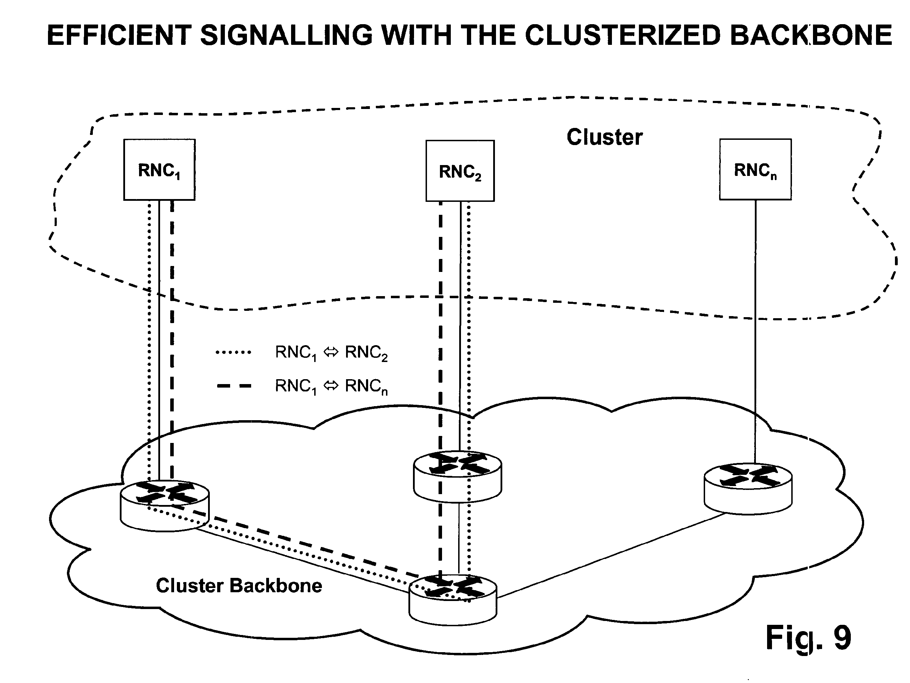

The main functionality requested to the cluster backbone is the capability to ensure full connectivity between all RNC nodes that are members of the given cluster. Instead of being realised via a full mesh of physical connections between the RNCs, the cluster backbone must provide routing capabilities that ensure the communication between any member of the cluster. In other terms, the cluster backbone has to provide the typical routing functionality of an IP-based transport network. The routing functionality of the backbone allows an efficient signalling between the RNCs, as graphically shown in **fig.9.**

As already said in the introduction, the interconnected nodes can either be *Client* or *Server* depending on the type of message *Request*/*Response* forwarded to the peer node. A *Client Node* can redirect a signalling request coming from a user terminal or from the Core Network to a *Serving Node* in the same cluster when the following conditions are met:
- The *Client Node* is in a congested state, i.e. the load of the signalling processor(s) of the *Client Node* exceeds a predefined threshold for a given time frame (the threshold is an engineeri ng parameter), and
- The *Client Node* still has free resources both in the Node B and in transport, and
- There is at least one suitable *Serving Node* in the cluster, i.e. a controller which has sufficient processing capacity lett on its signalling processor(s) and accepts the redirection request coming from the *Client Node.*

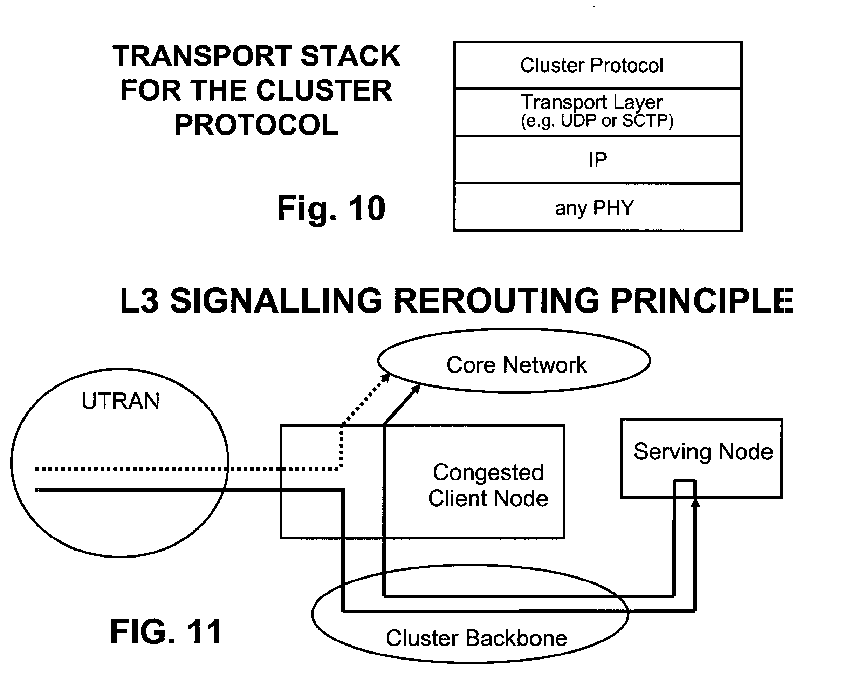

The *Client Node* always acts as anchor point for interfaces to the Node B and to the Core Network. In accordance with a transparency principle at the lu interface, the Core Network must not be aware of signalling rerouting inside the UTRAN. This concept is better illustrated with the help of **fig.11,** where a dotted line indicates L3 signalling from the UTRAN routed by a congested Client Node (RNC) to the Core Network directly, while a thick line indicates L3 signalling from the UTRAN routed to the Core Network indirectly by the same congested Client Node after a passage through a Serving Node, which elaborates the received signalling on behalf of Client Node.

An appropriate Cluster protocol has been defined to rule the Client/Server talk. The description of the type of messages of the Cluster protocol is reported in the **Signalling Table** included in the attached **APPENDIX A.** The Cluster protocol adopts the Client/Server paradigm to reroute Request/Response signalling messages towards the respective destinations trough the cluster backbone. These messages are conveyed by standard transport layers and can therefore be supported on any physical medium available to the RNC. In the specific case of an IP-based cluster backbone, a possible representation of the transport stack for the Cluster protocol is reported in **fig.10.** With reference to **fig.10,** we see that either UDP or SCTP can be used at the transport layer. UDP is the most general choice, while SCTP is more robust than UDP because includes functions to implement: flow control, retransmission, and path redundancy between two endpoints. In the latter case the Cluster protocol constitutes an enhancement of the protocol stack of **fig.6** available at the lur interface.

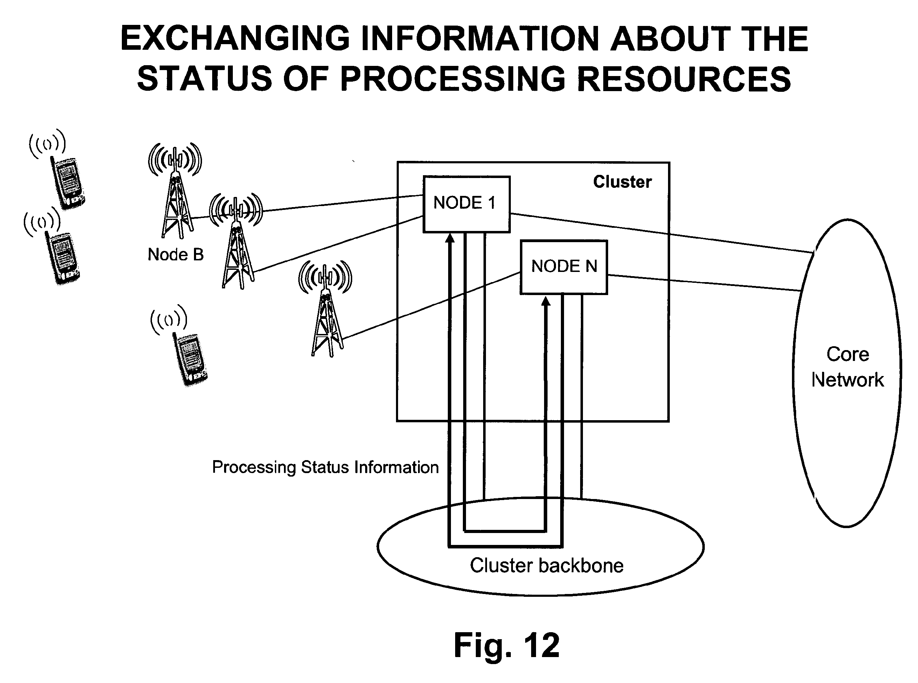

Before describing the flow-chart of the Cluster protocol, an anticipation of its general behaviour is illustrated graphically with the help of the **figures 12** to **15** relevant to respective signalling procedures.

**Fig.12** is referred to the procedure of: *Exchanging information about the status of processing resources.* By means of this procedure the members in the cluster exchange *Processing Status* messages which provide all members of the cluster with the information about the status of processing resources of each node. These messages have to be exchanged periodically. The actual frequency is an engineering parameter, which will result from a trade-off between achieving an accurate picture of the state of resources within the cluster and exploiting transport resources in an optimal way.

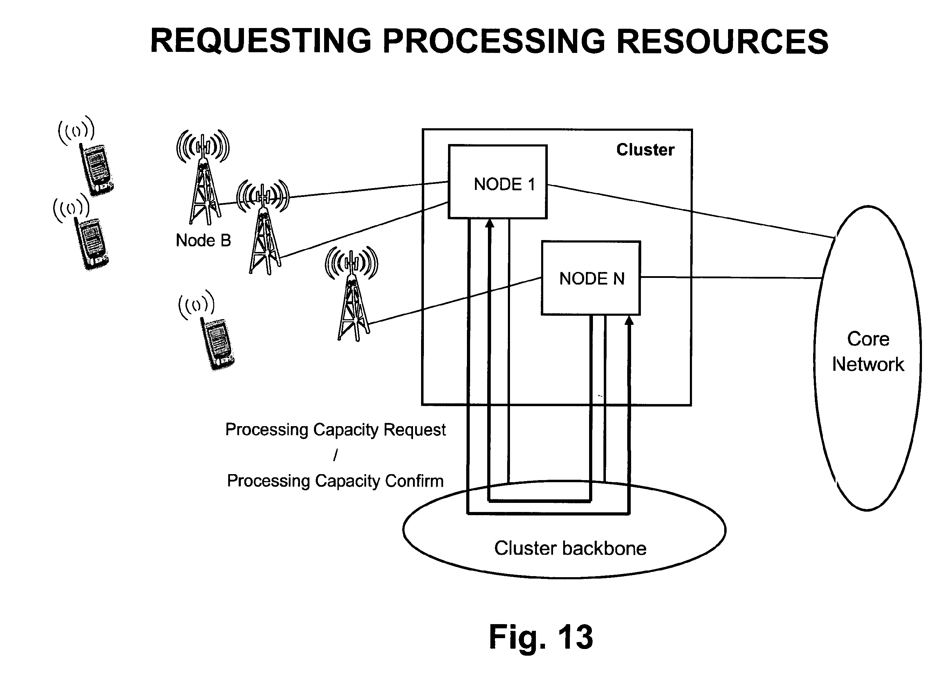

**Fig.13** is referred to the procedure of: *Requesting processing resources.* By means of this procedure when getting close to congestion state, a node in the cluster (Client Node) issues a *Processing Capacity Request* message towards a node which (via the previously mentioned exchange of *Processing Status* messages) is known to have free processing capacity (target Serving Node). The message carries the status of resources controlled by the Client Node; this will allow the Serving Node to consistently take over their control if accepting the request. The processing load threshold which controls the transmission of the *Processing Capacity Request* message is an engineering parameter. In the shown case, the selected Serving Node acknowledges the request by sending a *Processing Capacity Confirm* message. The *Processing Status* messages sent by the Serving Node after accepting the request will take into account, in addition to the processing resources that are necessary for serving local requests, the resources consumed in order to support the Client Node. The Client Node can now redirect incoming signalling requests to the Serving Node.

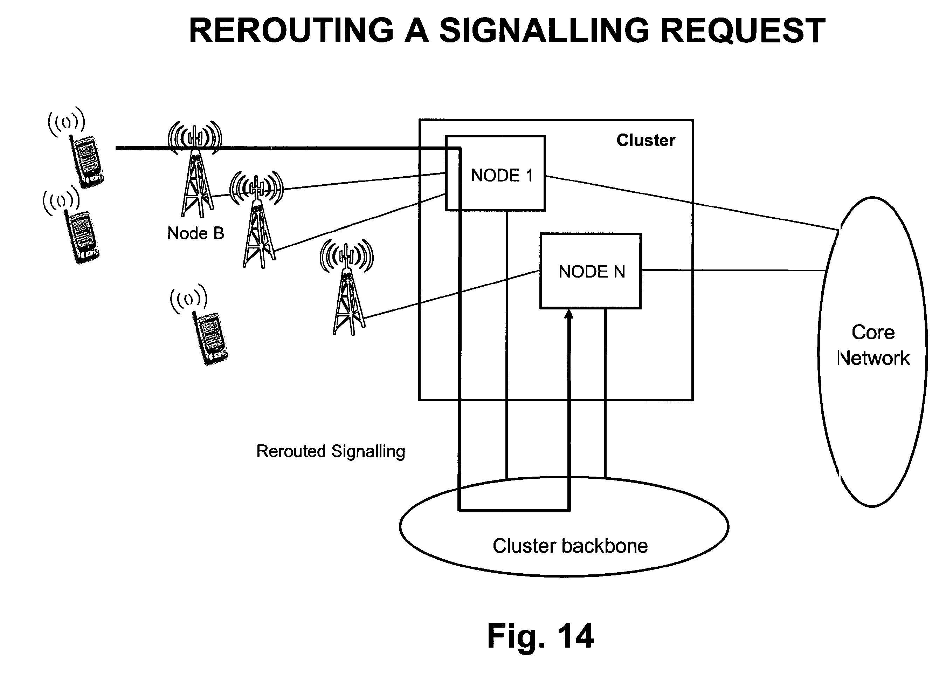

**Fig.14** is referred to the procedure of: *Rerouting a signalling request* performed by a Client node after the reception of a *Processing Capacity Confirm* message from the Serving Node. By means of the rerouting procedure the Client Node reroutes to the Serving Node requests to set up new calls or packet data transmissions.

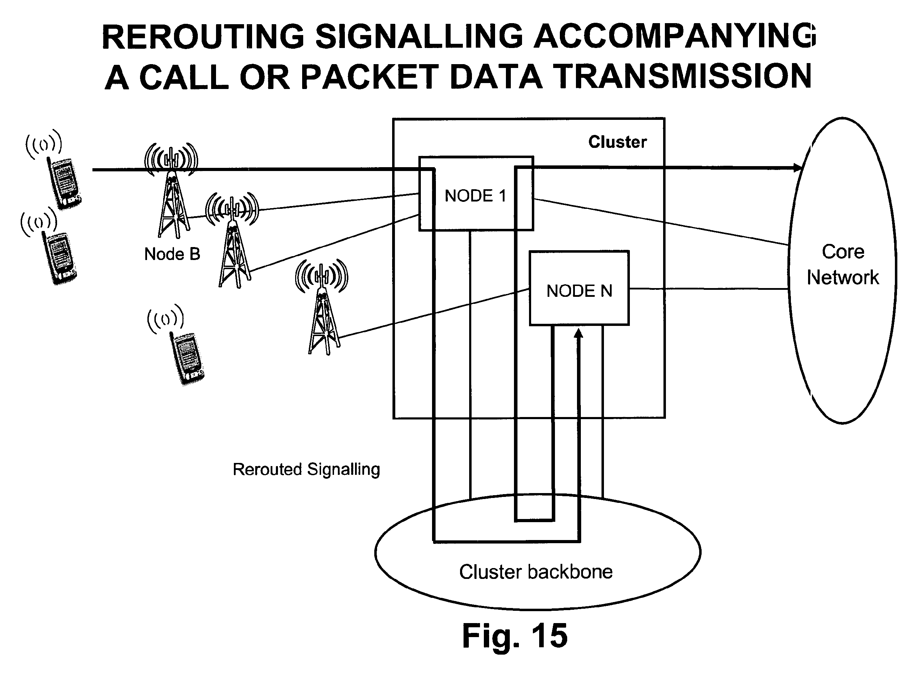

**Fig.15** is referred to the procedure of: *Rerouting signalling accompanying a call or packet data transmission.* By means of this procedure the Client Node, after having rerouted a request for accepting new calls, reroutes to the Serving Node all the successive signalling accompanying the new calls or packet data transmissions.

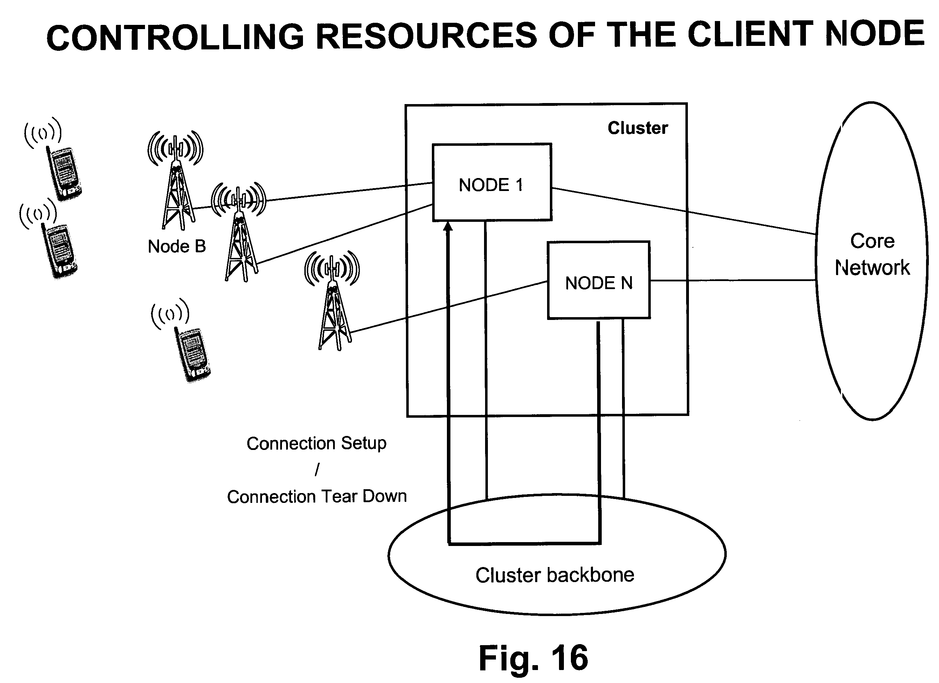

**Fig.16** is referred to the procedure of: *Controlling resources of the Client Node.* By means of this procedure the Serving Node, while is serving signalling requests reflected from the Client Node, will control resources of the Client Node via *Connection Setup* or *Connection Tear Down* messages. The Client Node will update the state of Base Station and transport resources accordingly, in order to be ready to consistently take over control again when reaching the end of the congestion state.

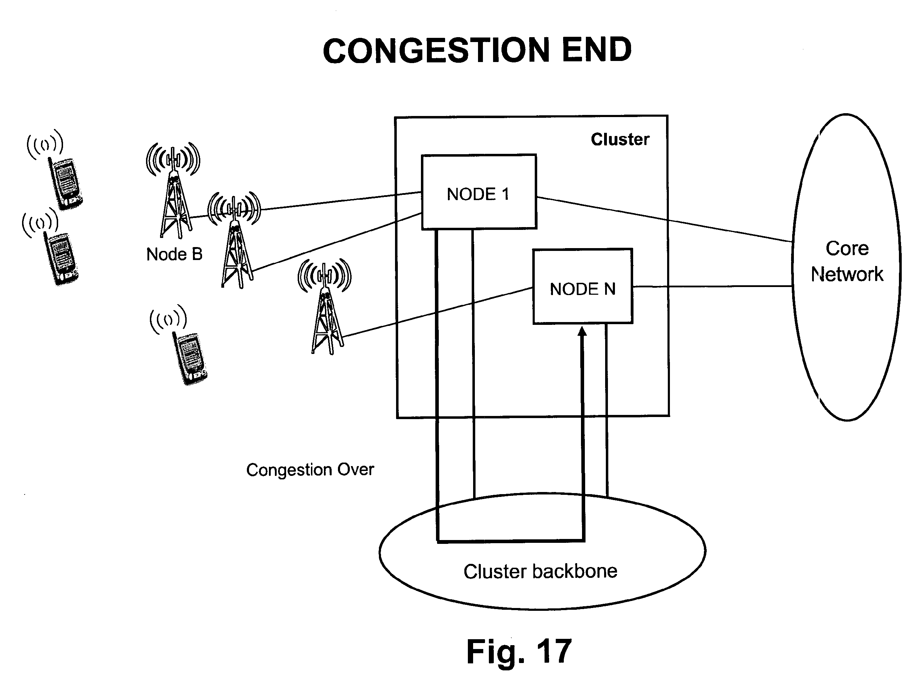

**Fig.17** is referred to the procedure of: *Congestion end.* By means of this procedure the Client Node, when getting to the end of the congestion state, issues a *Congestion Over* message to the Serving Node, which will then release accordingly the processing resources used to support the Client Node. The threshold that controls the end of the congestion state is an engineering parameter.

The procedures briefly illustrated above highlight the versatility of the new Cluster protocol to be implemented either as complementary to the existing RNSAP for UTRAN applications or standing alone.
- In the first case (complementary) the Cluster protocol is integrated with the RNSAP messages and procedures to constitute an upgraded Cluster protocol which further extends the RNSAP functionality at the connections through the backbone. The contrary is also true, that is RNSAP, duly integrated with the new messages of the Cluster protocol and the relevant procedures, should constitute an upgraded RNSAP version extended to the new connectivity trough the backbone. In both cases RNSAP is not exactly translated as the original version but adapted to fit with the integration and the new connectivity through the backbone; the mere adaptation process being matter of common design.
- In the second case (standing alone) the Cluster protocol may profitably use the same Information Elements about processing load currently calculated for RNSAP. With that, the Cluster protocol runs on the top of the stack (fig.10) parallelly to RNSAP.

The previous considerations on the integration/cohabitation between RNSAP and the Cluster protocol can be easily extended to other contexts different from UTRAN. In fact, RNSAP mostly operates in the optic of an ordinary RRC protocol running at the interfaces of a base station controller.

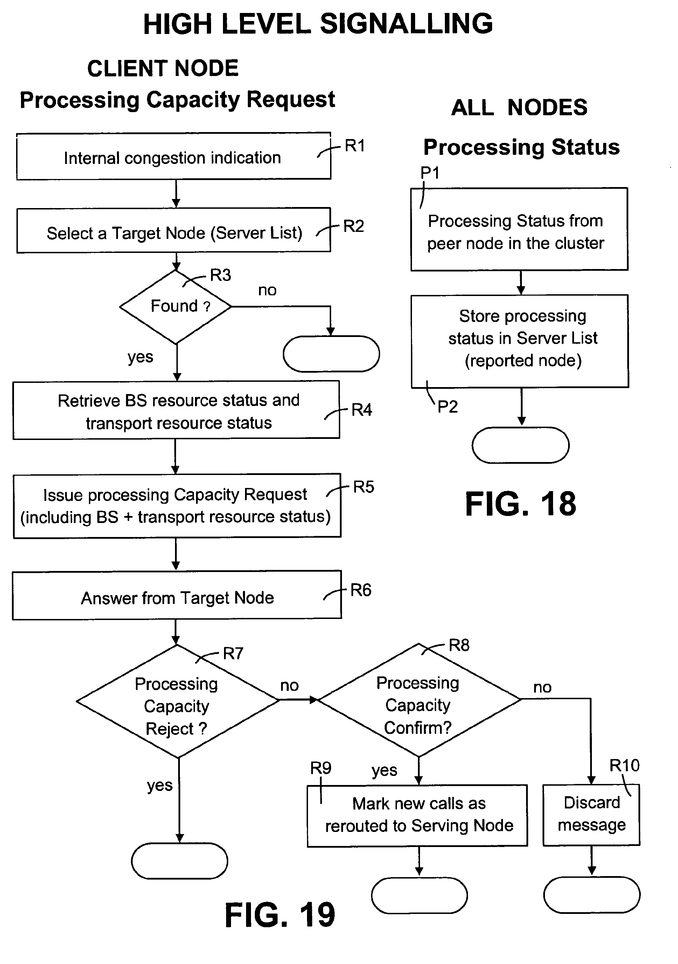

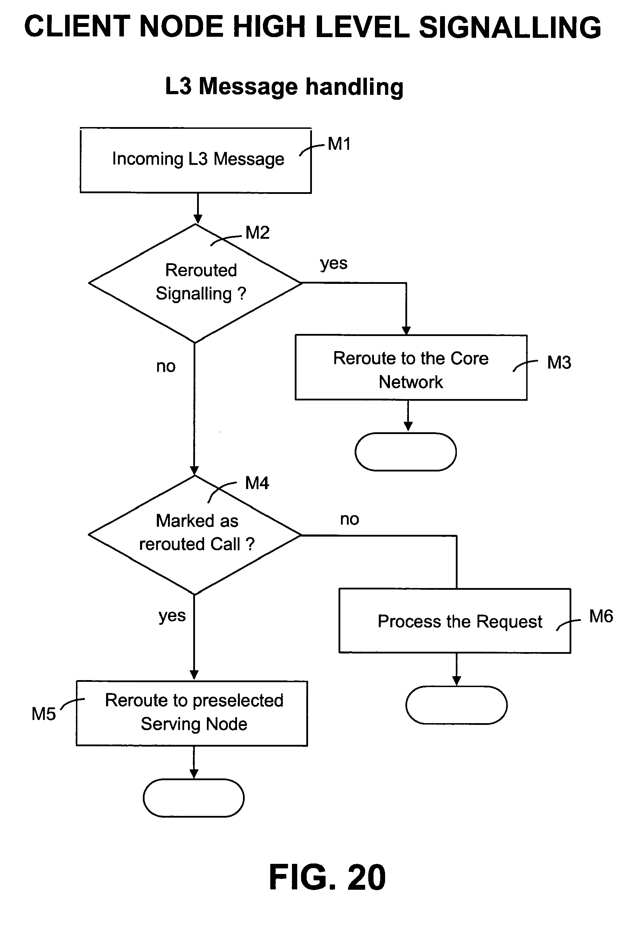

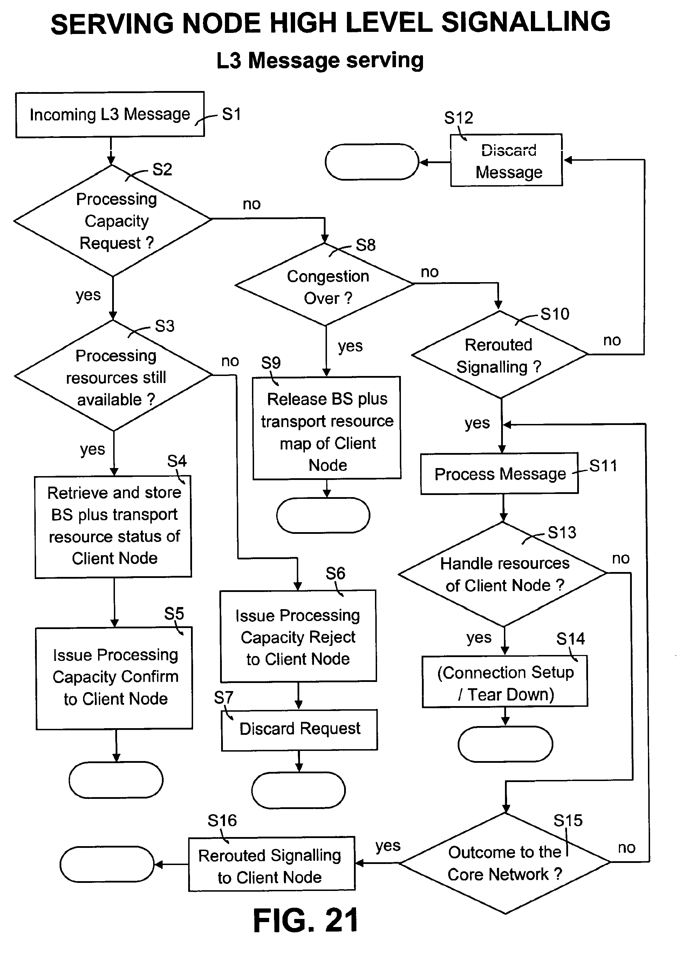

**Figures 18** to **21** provide the flow-charts of the Cluster protocol. **Fig.18** concerns a "Processing Status" module executed by all nodes of the cluster independently of their characterization as Client or Serving node. **Figures 19** and **20** concern the behaviour of a node acting as a Client node. **Fig.21** concerns the behaviour of a node acting as a Sever node. The Client node protocol consists of two concurrent modules named "Processing Capacity Request" and "L3 Message handling", respectively. The Serving node protocol consists of a single module named "L3 message serving". Protocols at the Serving and Client nodes run concurrently. Each Node of a given cluster avail of its internal processing capability for executing the steps of the Cluster protocol and routing the involved signalling messages through the cluster backbone. To the routing purpose, each Level 3 message shall include both the addresses of the sender and the receiver nodes, e.g.: the respective URIs, and the addresses of the ports used for UDP/SCTP. In addition, a suitable routing mechanism shall be provided to the routers taking part of the IP backbone, e.g.: RIP, OSPF, etc.

With reference to the "Processing Status" module of **fig.18,** each node sends information (P1) related to the status of processing resources (i.e. load percentage of the CPU, internal memory occupancy, etc.) to the other nodes in the cluster; in its turn each node acquires said information from the other nodes and stores them into a table called Server List (P2). This table is stored into a memory internal to the node made accessible to the other nodes. The Server List is periodically updated. The empty label in figure is a return to the beginning of the flow-chart.

With reference to the "Processing Capacity Request" module of **fig.19,** the Client node upon detecting to be close to a congestion state of the internal processor (R1) searches for a possible Serving Node from the Server List (R2). If a target node is selected (R3), the Client Node retrieves the status of the resources (free or occupied) assigned to the controlled Base Stations inclusive of transport (R4). In the successive step (R5) the Client node issues to the target node a *Processing Capacity Request* message, including information on the status of the controlled resources retrieved in the preceding step (R4) (this will allow the target node to consistently take over the control of those resources if the request is accepted). Possible responses from the Target Node are: *Processing Capacity Reject (R7), Processing Capacity Confirm* (R8), or none. In the first case (R7) the Client node repeats the preceding steps R1-R6 with another target node; in the second case (R8) the new incoming calls are marked as rerouted to the Serving Node (R9); while in the third case (R10) the *Processing Capacity Request* message is discarded.

With reference to the "L3 Message handling" module of **fig.20,** the Client node detects an incoming Level 3 Message (M1) and ascertains the nature of the message (M2, M4). If the message corresponds to *Rerouted Signalling* issued by the Serving node (M2), the content of received message is rerouted to the Core Network (M3). If the message concerns a call marked as rerouted (M4), the content of received signalling is rerouted to the preselected Serving node (M5). If none of the preceding cases is met, the received message is processed internally to the node (M6).

With reference to the "L3 Message serving" module of **fig.21,** the Serving node detects an incoming Level 3 Message (S1) and ascertains the nature of this message (S2, S8, S10). If the incoming L3 message (S1) concerns *Processing Capacity Request* (S2) from a Client node, the Serving node further ascertains if there is processing resources still available in its internal (S3). In case of positive answer, the Serving node retrieves the overall resource status information transmitted by the Client node and stores this information in the internal memory (S4), successively issues a *Processing Capacity Confirm* message to the Client node (S5). In case of processing resources not more available in step S3, the Serving node issues a *Processing Capacity Reject* message to the Client node (S6) and discard the request (S7). If the incoming L3 message (S1) concerns *Congestion Over* (S8), the Serving node deletes stored information on the overall resource status of the requesting Client node (S9). If the incoming L3 message (S1) concerns *Rerouted Signalling* (S10), the Serving node takes over the signalling related to the new call/s or packet data transmission/s accepted by the Client node and processes it/them (S11). If none of the previous case is met by the incoming L3 message (S1), the latter is discarded (S12). If the Serving node, when processing the *Rerouted Signalling* message content (S11), has to remotely handle the resources of the Client node (S13), provides to send it either the *Connection Setup* or *Connection Tear Down* message (S14). *Connection Setup* is a message to ask the Client node for setting up Base Station and transport resources to support an originated call and/or a packet data transmission. *Connection Tear Down* is a message to ask the Client node for releasing the engaged resources of a terminated call and/or a packet data transmission. When the Serving node terminates to process the rerouted signalling (S11) and the outcome is a signalling to be directed to the Core Network (S15), this signalling is instead redirected to the relevant Client Node (S16) which provides to this aim transparently.

On the basis of the above description some changes may be introduced in the exemplary embodiment by the skilled in the art without departing from the scope of the invention.

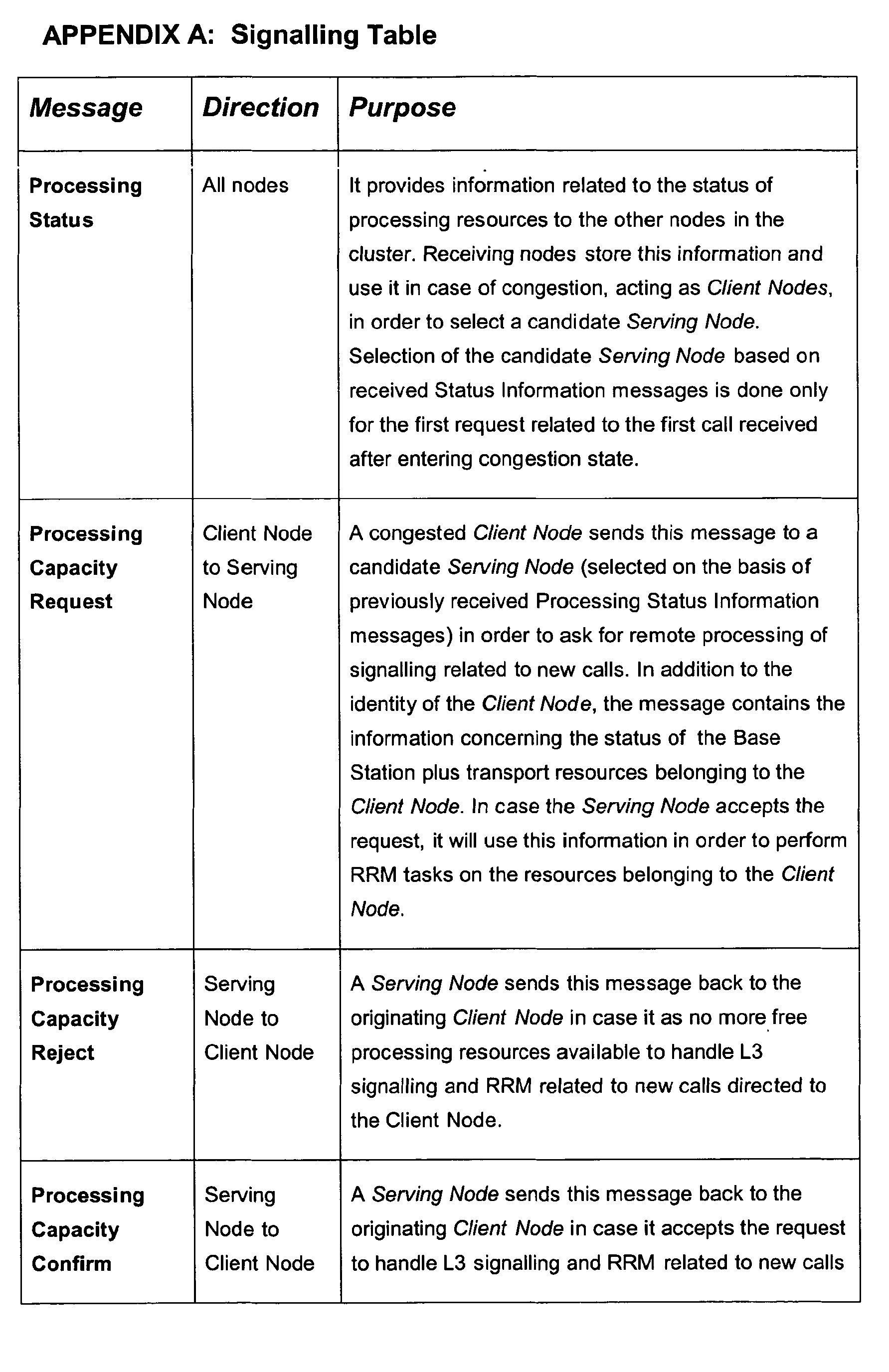

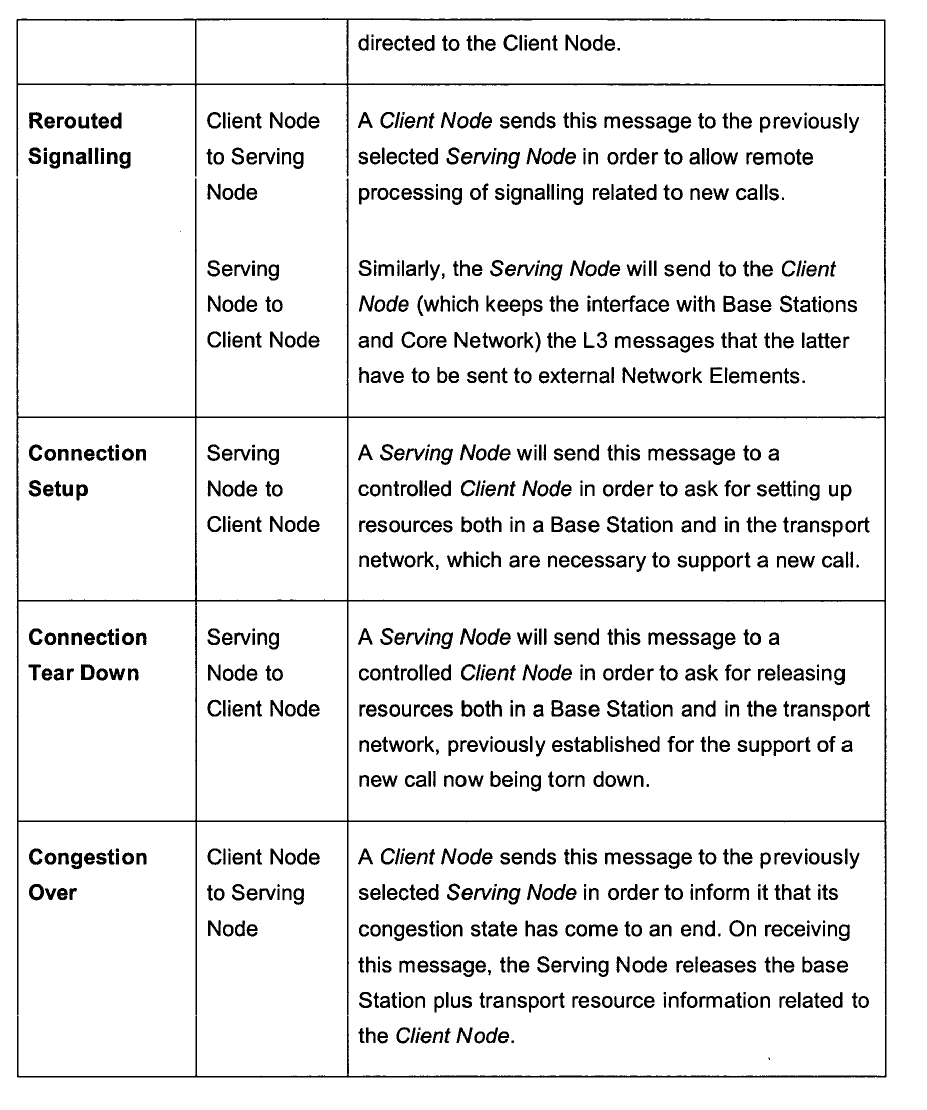

### USED ACRONYMS

- 3GPP: 3^{rd} Generation Partnership Project
- AMR: Adaptive MultiRate
- CDMA: Code Division Multiple Access
- CN: Core Network
- CS: Circuit Switched
- DCH: Dedicated Channel
- FDD: Frequency Division Duplex
- FDMA: Frequency Division Multiple Access
- GSM: Global System for Mobile
- HDLC: High Level Data Link Control
- IE: Information Element
- ITU: International Telecommunication Union
- M3UA: MTP3 User Adaptation Layer
- MAC: Medium Access Control layer
- MGW: Media Gateway
- MM: Mobility Management
- MPLS: Multi-Protocol Label Switching
- MSC: Mobile Switching Centre
- MTP3-B: Message Transfer Part Layer 3 Broadband
- NBAP: Node B Application Part
- NE: Network Element
- OFDM: Orthogonal Frequency Division Multiplexing
- OMC: Operation & Maintenance Centre
- OSPF: Open Shortest-Path First
- PCM: Pulse Code Modulation
- PLMN: Public Land Mobile network
- PPP: Point-to-Point Protocol
- PS: Packet Switched
- PSTN: Public Switched Telephone Network
- QoS: Quality of Service
- RAB: Radio Access Bearer
- RAN: Radio Access Network
- RANAP: Radio Access Network Application Part
- RIP: Routing Information Protocol
- RLC: Radio Link Control layer
- RNC: Radio Network Controller
- RNL: Radio Network Layer
- RNS: Radio Network Subsystem
- RNSAP: Radio Network Subsystem Application Part
- RRC: Radio Resource Control layer
- RSVP: Resource Reservation Protocol
- SCCP: Signalling Connection Control Part
- SCTP: Stream Control Transmission Protocol
- SDMA: Space Division Multiple Access
- SG: Signalling Gateway
- SGSN: Serving GPRS Support Node
- SSCF-NNI: Service Specific Coordination Function at the Network Node Interface
- SSCOP: Service Specific Connection Oriented Protocol
- STMn: Synchronous Transfer Mode-n
- SUA: SCCP-User Adaptation Layer
- TDD: Time Division Duplex
- TDMA: Time Division Multiple Access
- TNL: Transport Network Layer
- UDP: User Datagram Protocol
- UE: User Equipment
- UMTS: Universal Mobile Terrestrial System
- UTRAN: UMTS Terrestrial Radio Access Network
- VPN: Virtual Private Network
- URI: Uniform Resources Identifier

### REFERENCES

- TS 25.423 "3^{rd} Generation Partnership Project; Technical Specification Group Radio Access Network; UTRAN lur Interface RNSAP signalling (Release 6)".
- TS 25.331 "3^{rd} Generation rarinership Project; Technical Specification Group Radio Access Network; Radio Resource Control (RRC); Protocol Specification (Release 99)".
- TS 25.413 "3^{rd} Generation Partnership Project; Technical Specification Group Radio Access Network; UTRAN lu interface RANAP signalling (Release 99)".
- TS 25.412 "3rd Generation Partnership Project; Technical Specification Group Radio Access Network; UTRAN lu Interface Signalling Transport (Release 99)".
- TS 25.420 v6.3.0. "UTRAN lur Interface: General Aspects and Principles", (Release 6).
- TR 29.903: "Feasibility study on SS7 signalling transportation in the core network with SCCP-User Adaptation (SUA)".
- TR 25.933: "3^{rd} Generation Partnership Project; Technical Specification Group Radio Access Network; IP transport in UTRAN (Release 5)".
- ITU-T Recommendation Q.2110: "B-ISDN ATM Adaptation Layer - Service Specific Connection Oriented Protocol (SSCOP)".
- ITU Recommendation Q.2150.3, and RFC 3309: "Stream Control Transmission Protocol (SCTP)".
- ITU-T Recommendation 1.361 (02/99): "B-ISDN ATM Layer Specification".
- ITU-T Recommendation G.703 (10/98): "Physical/electrical characteristics of hierarchical digital interfaces".
- ITU-T Recommendation Q.2140: "B-ISDN ATM adaptation layer - Service specific coordination function for signalling at the network node interface (SSCF-NNI)".
- ITU-T Recommendation 1.432.1 (8/96): "ISDN User-Network interfaces, Layer 1 Recommendations, General chara cteristics".
- IETF RFC 791 (9/1981): "Internet Protocol" (IP).
- IETF RFC 2917 (9/2000): "A Core MPLS IP VPN Architecture".
- IETF RFC 3332: "Signalling System 7 (SS7) Message Transfer Part 3 (MTP3) - User Adaptation Layer (M3UA)".
- IETF RFC 2453 (also STD 0056) - (11/1998): "RIP - Routing Information Protocol"; Version 2; G. Malkin.
- IETF RFC 1583 (3/1994): "OSPF Version 2".

## Claims

1. Method for sharing signalling load between base station controllers (RNC), also called nodes, of a radio access network belonging to a mobile radio communication system via a transport network (Cluster Backbone) interconnecting said controllers, where each node processes the Radio Resource Control signalling to serve voice calls and/or packet data transmissions and measures processing load, periodically, in order to detect an incoming congestion state of the internal processing means, **characterized in that** includes the following steps:
a) spreading around processing capacity status information from each node to other nodes of a cluster of nodes constituting an independent signalling processing pool;
b) issuing a processing capacity request from a congested or nearby congested node to a target node of said cluster having residual processing capacity;
c) rerouting the incoming signalling from the requesting node to the target node which accepts said request as serving node;
d) processing the rerouted signalling by the serving node on behalf of the requesting node;
e) rerouting the outcome of the processed signalling from the serving node to the requesting node.

2. The method of claim 1, **characterized in that** the requesting node forwards said outcome of the processed signalling to the Core Network, transparently.

3. The method of any preceding claim, **characterized in that** the processing capacity request issued at step b) is a message also including information about the state of the base station resources controlled by the requesting node inclusive of transport-specific resources.

4. The method of claim 3, **characterized in that** the target node retrieves and stores said information about the state of the base station plus transport-specific resources of the requesting node.

5. The method of claim 4, **characterized in that** the requesting node iterates said processing capacity request to another target node until the request is accepted.

6. The method of claim 5, **characterized in that** the serving node takes over the control of said base station plus transport-specific resources for new calls and/or packet data transmissions until said detected congestion state remains.

7. The method of any preceding claim, **characterized in that** during the processing executed at step d) the serving node remotely handles the resources of the requesting node.

8. The method of claim 7, **characterized in that** the serving node issues a Connection Setup message to ask the requesting node for setting up Base Station and transport resources for supporting originated call/s and/or packet data transmission/s.

9. The method of claim 7, **characterized in that** the serving node issues a Connection Tear Down message to ask the requesting node for releasing the engaged resources of a terminated call and/or a packet data transmission.

10. The method of any preceding claim, **characterized in that** the requesting node issues a Congestion Over message to the serving node.

11. The method of claim 10, **characterized in that** the serving node deletes said stored information on the status of the resources of the requesting node.

12. The method of any preceding claim, **characterized in that** said nodes exchange signalling messages including source and destination addresses, and said transport network avails of a known routing protocol for routing said messages through the cluster's nodes of disjoint backbones (Cluster 1 backbone, Cluster 2 backbone) each one dedicated to a respective cluster.

13. The method of any preceding claim except 12, **characterized in that** said nodes exchange signalling messages including source and destination addresses, and said transport network avails of a known routing protocol for routing said messages through the cluster's nodes of a single backbone (Cluster Backbone) for all clusters.

14. The method of any preceding claim, **characterized in that** said transport network (Cluster Backbone) is based on Internet Protocol for routing signalling messages between said nodes.

15. The method of any preceding claim, **characterized in that** said radio access network is implemented according to 3GPP UTRAN specifications.

16. The method of claim 15, **characterized in that** is integrated with messages and procedures of the Radio Network Subsystem Application Part, known as RNSAP protocol, for extending the RNSAP functionality at the interface with the transport network (Cluster Backbone).

17. The method of claim 15, **characterized in that** makes use of Information Elements about the processing load currently calculated for the aims of the Radio Network Subsystem Application Part, known as RNSAP protocol.
